# EUROPÄISCHE PATENTSCHRIFT

(11) **EP 2 105 342 B1**
(45) Veröffentlichungstag und Bekanntmachung des Hinweises auf die Patenterteilung: **13.01.2016**
(21) Anmeldenummer: 09001017.4
(22) Anmeldetag: 26.01.2009
(51) Int. Cl.: B60L 11/00, B60L 11/18, B60L 15/20

(54) **Flurförderzeug mit einem elektrischen Antrieb**
Industrial truck with an electrical drive
Chariot de manutention doté d'un entraînement électrique

(30) Priorität: 04.02.2008 DE 102008007886
(43) Veröffentlichungstag der Anmeldung: 30.09.2009
(73) Patentinhaber: Jungheinrich Aktiengesellschaft, 22047 Hamburg (DE)
(72) Erfinder: Eggert, Nikolaus, 22587 Hamburg (DE); Taube, Stephan, 22846 Norderstedt (DE)
(74) Vertreter: Hauck Patentanwaltspartnerschaft mbB

(56) Entgegenhaltungen:
- EP-A1- 0 536 490
- DE-A1- 19 628 877
- US-A- 5 710 699

## Beschreibung

Die vorliegende Erfindung betrifft ein Flurförderzeug mit einem elektrischen Antrieb, der von einer wiederaufladbaren Batterie gespeist ist. Ferner besitzt das Flurförderzeug eine Steuerung, um den elektrischen Antrieb in einen generatorischen Betrieb umzuschalten. Bei dem elektrischen Antrieb kann es sich um einen elektrischen Fahrantrieb für das Flurförderzeug handeln, es ist aber auch möglich, die Erfindung für elektrische Hubantriebe und/oder elektrische Lenkungen einzusetzen.

Allgemein ist bei Flurförderzeugen bekannt, durch Umschalten des elektrischen Antriebs in einen generatorischen Betrieb elektrische Energie zu gewinnen. Gelegentlich wird diese Betriebsart für Flurförderzeuge auch als Nutzbremsen und/oder Nutzsenken bezeichnet.

Bei dem herkömmlichen System wird die generatorisch gewonnene elektrische Leistung entweder in die Batterie zurückgeführt oder elektrisch direkt verbraucht.

In der DE 196 28 877 A1 wird ein Verfahren zum Betrieb eines Fahrzeuges mit einer ersten und einer zweiten Antriebsenergiequelle beschrieben, bei dem beim Abbremsen des Fahrzeugs freiwerdende Energie teilweise in den Energiequellen gespeichert wird.

Ein Gleichstromantrieb mit Anlasshilfe für Flurförderfahrzeuge, insbesondere Deichselfahrzeuge im Mitgehbetrieb, wird in EP 0 536 490 A1 beschrieben. Der Gleichstromantrieb mit Anlasshilfe ist derart ausgebildet, dass er ein Rückrollen des Fahrzeuges beim Anfahren an einer Steigung verhindert.

Der Erfindung liegt die Aufgabe zugrunde, ein Flurförderzeug mit einem elektrischen Antrieb bereitzustellen, dessen elektrische Versorgung durch eine Batterie möglichst langlebig und stabil ist.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug besitzt einen elektrischen Antrieb, der von einer wiederaufladbaren Batterie gespeist werden kann. Ferner ist das Flurförderzeug mit einer Steuerung für den elektrischen Antrieb ausgestattet, die den Antrieb in einen generatorischen Betrieb umschalten kann. Erfindungsgemäß ist ein zweiter Energiespeicher vorgesehen, der im generatorischen Betrieb des Antriebs aufladbar ist und im motorischen Betrieb den Antrieb speisen kann. Wie an sich bereits bekannt, wird bei dem erfindungsgemäßen Flurförderzeug in einen generatorischen Antrieb des elektrischen Antriebs umgeschaltet, um elektrische Energie zu gewinnen. Die elektrische Energie kann beispielsweise aus einem Bremsvorgang gewonnen werden oder aus anderen Vorgängen, wie beispielsweise dem Absenken einer Last oder der Kurvenfahrt. Bei dem erfindungsgemäßen Flurförderzeug wird die generatorisch gewonnene elektrische Energie für einen zweiten Energiespeicher eingesetzt, der im generatorischen Betrieb wieder aufgeladen wird. Im motorischen Betrieb kann der zweite Energiespeicher derart zu dem Antrieb geschaltet werden, dass der Antrieb zusätzlich durch den zweiten Energiespeicher gespeist wird.

Bei dem erfindungsgemäßen Flurförderzeug wird die Batterie im besonderen Maße geschont. So besteht der Vorteil, dass die Batterie im generatorischen Betrieb nicht direkt wieder aufgeladen wird, so dass die Batterie kontrollierten Lade- und Entladezyklen unterworfen werden kann. Auch bietet der weitere Energiespeicher den Vorteil, dass dieser der Versorgung des elektrischen Antriebs zugeschaltet werden kann und so die Batterie geschont wird, gerade bei einer großen Leistungsentnahme.

Bei einer bevorzugten Ausgestaltung des erfindungsgemäßen Flurförderzeugs ist der weitere Energiespeicher auf eine Ladespannung aufgeladen, die größer oder gleich der Batteriespannung ist. Das Aufladen des zweiten Energiespeichers auf eine besonders hohe Spannung bietet den Vorteil, dass bei Zuschalten des zweiten Energiespeichers der Antrieb mit einer ausreichend hohen Spannung versorgt werden kann, selbst wenn die Spannung aus der Batterie bereits abnimmt.

In einer bevorzugten Weiterbildung des erfindungsgemäßen Flurförderzeugs wird in vorbestimmten Fahr- und/oder Betriebszuständen der elektrische Antrieb von dem zweiten Energiespeicher gemeinsam mit der Batterie gespeist. In dieser Ausgestaltung erfolgt in definierten Fahr- und/oder Betriebszuständen des Flurförderzeugs ein Zuschalten des zweiten Energiespeichers zusätzlich zu der Versorgung aus der Batterie.

Bei den besonderen Fahr- und Betriebszuständen ist für die Zuschaltung des zweiten Energiespeichers, besonders die Beschleunigung als besonders leistungsintensiver Fahrzustand, von Interesse. Es ist daher vorgesehen, dass vorzugsweise bei einer Beschleunigung des Fahrzeugs, der zweite Energiespeicher zur zusätzlichen Spannungsversorgung eines elektrischen Fahrantriebs zugeschaltet wird. Hierbei kann für die Beschleunigung ein Mindestwert definiert sein, bei dessen Überschreiten die Zuschaltung des zweiten Energiespeichers erfolgt.

Ebenfalls kann als eine besondere Fahrbedingung vorgesehen sein, dass bei Überschreiten einer vorbestimmten Geschwindigkeit des Flurförderzeugs der zweite Energiespeicher zur Versorgung des Fahrantriebs zugeschaltet wird. Auch bei Überschreiten einer maximalen Höchstgeschwindigkeit kann der Fahrantrieb zusätzlich durch den zweiten Energiespeicher versorgt werden.

Alternativ ist es auch möglich, dass der zweite Energiespeicher ausschließlich zur Spannungsversorgung des elektrischen Antriebs vorgesehen ist, wenn bestimmte Fahr- und/oder Betriebszustände für das Flurförderzeug vorliegen. In einer bevorzugten Ausgestaltung sind für das Flurförderzeug weitere Fahr- und/oder Betriebszustände definiert. Für die weiteren Fahr- und/oder Betriebszustände ist vorgesehen, dass der Energiespeicher von der Batterie auf seine Ladespannung wieder aufgeladen wird. Beispielsweise ist es möglich, als weiterer Fahr- und Betriebszustand für das Wiederaufladen des zweiten Energiespeichers, den Stillstand des Flurförderzeugs zu definieren.

In dem erfindungsgemäßen Flurförderzeug ist ein Neigungssensor vorgesehen, der dafür ausgelegt ist, die Neigung des Flurförderzeugs zu erkennen. Bevorzugt erfolgt ein Wiederaufladen des zweiten Energiespeichers abhängig von dem erfassten Wert für die Neigung. Hierbei wird, wenn der sensierte Wert für die Neigung eine Mindestneigung überschreitet, der zweite Energiespeicher auf einen vorbestimmten Wert wiederaufgeladen. Bei dem bestimmten Wert kann es sich um einen vorbestimmten Wert oder um einen adaptiven Wert handeln, der beispielsweise aus einer erfassten Umladebilanz der Batterie oder erfassten Betriebszuständen des Fahrzeugs ermittelt wird. In dieser Ausgestaltung wird sichergestellt, dass das an einer Rampe geneigt stehende Flurförderzeug direkt wieder anfahren kann, ohne dass die Batterie durch das Wiederaufladen des zweiten Energiespeichers geschwächt ist.

Die Erfindung wird nachfolgend anhand der Figuren näher erläutert.

Es zeigt:
- Fig. 1: eine schematische Schaltungsanordnung für einen Motor mit einer Batterie und einem parallel geschalteten Kondensator C2,
- Fig.2: eine schematische Schaltungsanordnung für einen batteriegespeisten Motor mit einem parallel geschalteten Energiesparmodul, das einen Kondensator aufweist,
- Fig. 3: eine schematische Schaltungsordnung eines batteriegespeisten Motors mit einem weiteren Energiesparmodul, das parallel zur Batterie geschaltet ist,
- Fig. 4: eine schematische Schaltungsanordnung für einen batteriegespeisten Motor mit einem parallel geschalteten Energiesparmodul, das einen Kondensator als Energiespeicher aufweist,
- Fig. 5: eine schematische Schaltungsanordnung mit einem Energiesparmodul, das einen Kondensator C2 aufweist, und
- Fig. 6: eine schematische Schaltungsanordnung für einen batteriegespeisten Motor nach dem Stand der Technik.

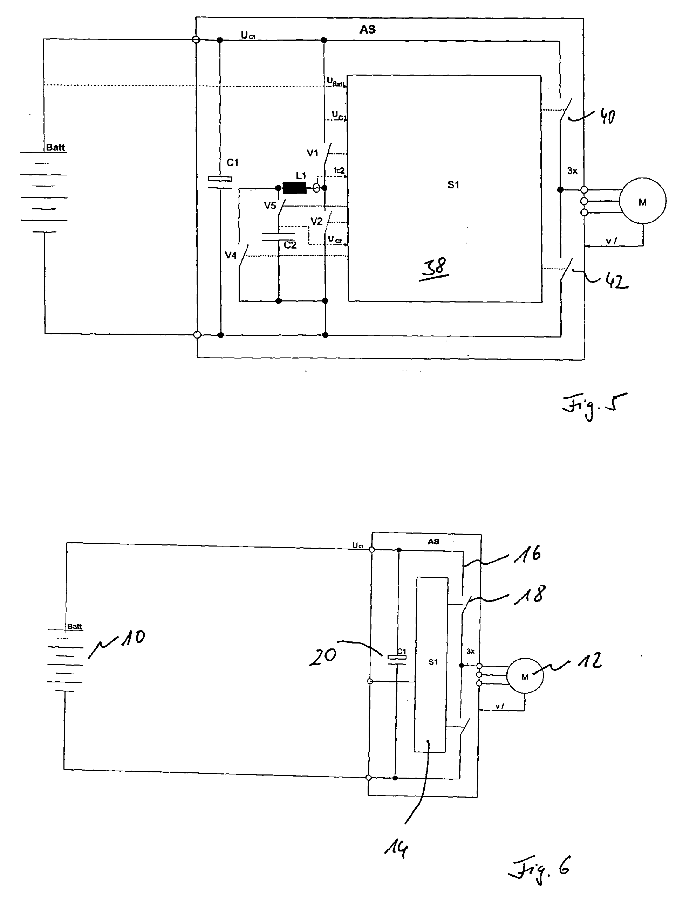

Zum besseren Verständnis der Erfindung sei nachfolgend zunächst die bereits bekannte Schaltungsordnung für einen batteriegespeisten Fahrantrieb erläutert. Bei dem Antrieb kann es sich um fremderregte oder permanent erregte Gleichstromantriebe, asynchrone oder synchrone Drehstromantriebe oder Reluktanzantriebe handeln. Die Antriebe können bei einem Flurförderzeug zum Heben, Antreiben einer Hydraulik, zum Lenken oder zum Fahren vorgesehen sein. Figur 6 zeigt eine Batterie 10, die zur Versorgung eines elektromotorischen Antriebs 12 vorgesehen ist. Parallel zu der Batterie 10 ist ein Kondensator C1 geschaltet. Über das Schaltelement S1 14 wird der mittlere Stromkreis 16 über die Schalter 18 geschlossen. Eine etwaige Ansteuerung des Schaltelements S 1 sowie eine Regelung der Spannung für den Antrieb 12 ist in Figur 6 nicht näher dargestellt.

Der parallel zur Batterie 10 geschaltete Kondensator 20 C1 ist bei der bekannten Schaltungsanordnung dafür ausgelegt, den beim Schalten des Schaltelements 14 auftretenden Wechselstromanteil aufzunehmen. Im regulären Betrieb ist die Spannung U_{C1}, die von der Batterie an dem Antrieb 12 angelegt wird, nicht stabilisiert und folgt damit den sich durch Be- und Entladevorgänge der Batterie ergebenden Spannungsschwankungen. Erfahrungsgemäß treten Spannungsschwankungen von bis zu +/- 50% des Nominalwerts der Batterie auf, so dass die Leistungsbauelemente, wie beispielsweise das Schaltelement 18 entsprechend auszulegen sind.

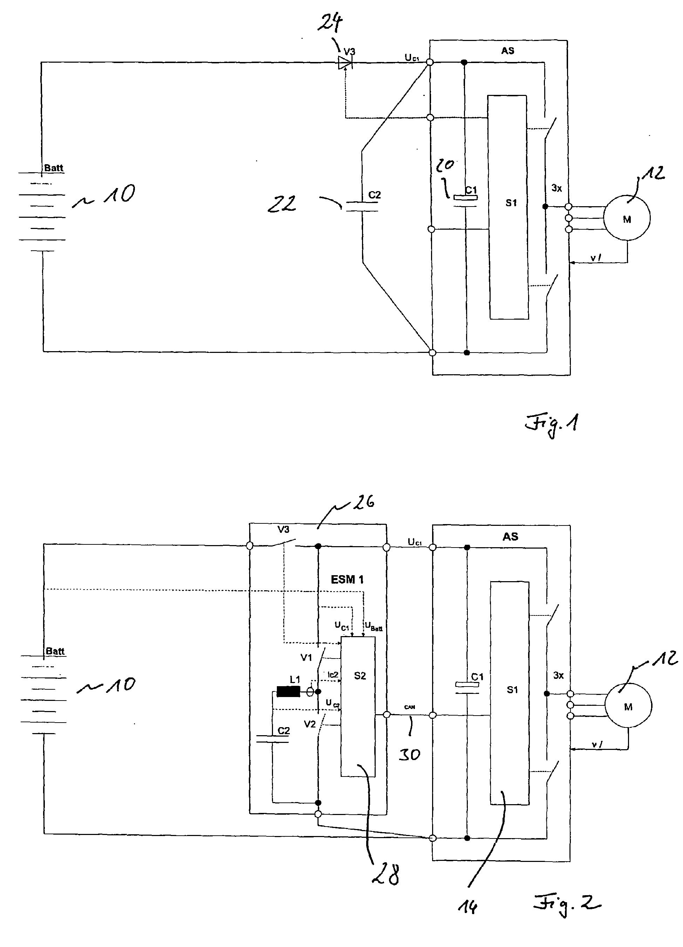

Figur 1 zeigt eine erste Ausgestaltung der erfindungsgemäßen Schaltungsanordnung. Parallel zu der bereits bekannten Schaltungsanordnung, die in Figur 1 mit den gleichen Bezugszeichen wie in Figur 6 gekennzeichnet ist, ist ein Kondensator 22 C2 geschaltet. Der Kondensator C2 ist dabei im Gegensatz zu dem bereits bekannten Kondensator C1 dafür ausgelegt, um als Energiespeicher Energie für den Antrieb 12 aufzunehmen. Der Kondensator C2 kann als sogenannter Doppelschichtkondensator ausgebildet sein, andere Ausführungen sind ebenfalls möglich. Bei der Verwendung eines Kondensators kann die gewonnene Energie verlustarm gespeichert werden. Für den Aufladevorgang des Kondensators C2 sind verschiedene Ansätze möglich: Unter anderem ist es auch möglich, eine Vorladeschaltung für den Kondensator vorzusehen, damit dieser auf einen gewünschten Spannungswert geladen werden kann. Vorteil der Vorladeschaltung ist, dass der Kondensator C2 bereits bei dem ersten Beschleunigungsvorgang nach Einschalten des Flurförderzeugs zur Verfügung steht.

Die Diode V3 24 ist für den Ladevorgang des Kondensators C2 vorgesehen. Durch Öffnen der Diode 24 ist es möglich, während des generatorischen Betriebes des Antriebs 12, den Kondensator C2 von der Batterie 10 zu trennen. Dies ermöglicht es, den Kondensator C2 auf eine höhere Spannung als die Spannung der Batterie zu laden. Beispielsweise kann der Kondensator C2 auf eine Ladespannung von + 20% über der Batteriespannung geladen werden. Der Kondensator C2 ist hierfür entsprechend dimensioniert.

Beim Bremsvorgang stellt C2 den Speicher für die Bremsenergie dar, der in Verbindung mit der Diode V3 24 auf ein Spannungsniveau von beispielsweise 20% über der Batteriespannung geladen wird. Für alle nachfolgenden Beschleunigungsvorgänge des Flurförderzeugs steht dann eine größere Energiemenge im Kondensator C2 zur Stützung der Spannung U_{C1} zur Verfügung. Die Diode V3 übernimmt die Aufgabe, dass der Kondensator C2 durch den Generator auf ein Spannungsniveau oberhalb der Nennspannung der Batterie aufgeladen werden kann. In der angesprochenen Ausführung der Diode V3 ist es auch möglich, hier einen Transistor oder einen Schütz vorzusehen, wobei diese dann betriebssynchron über die Steuerung 14 gesteuert werden müssen.

Figur 2 zeigt eine mögliche Ausgestaltung und besitzt ein Energiesparmodul 26, das mit einer Steuereinheit S2 28 ausgebildet ist. Die Steuereinheit 14 und die Steuereinheit 28 sind über ein CAN-Feldbus 30 miteinander verbunden. Über den Feldbus 30 werden von der Steuerung S1 ermittelte Fahr- und Betriebszustände des Fahrzeugs der Steuerung S2 28 mitgeteilt.

Als zweiter Energiespeicher steht der in Figur 2 dargestellten Variante der Kondensator C2 22 zur Verfügung.

An der Steuereinheit 28 liegen eine Reihe von Eingangsgrößen an. Es liegen der Messwert für die Batteriespannung U_{Batt}, die Versorgungsspannung U_{C1} sowie die Spannung an dem Kondensator C2 an. Ferner liegt an der Steuerung S2 der über den Kondensator C2 fließende Strom I_{C2} an. Der Kondensator C2 ist mit einer Induktivität L1 in Serie geschaltet. Über einen Schalter V1 wird der Kondensator C2 und die Induktivität L1 vollständig parallel zu der Batterie 10 geschaltet. Die Batterie 10 kann über den Schalter V3 zusätzlich zugeschaltet werden.

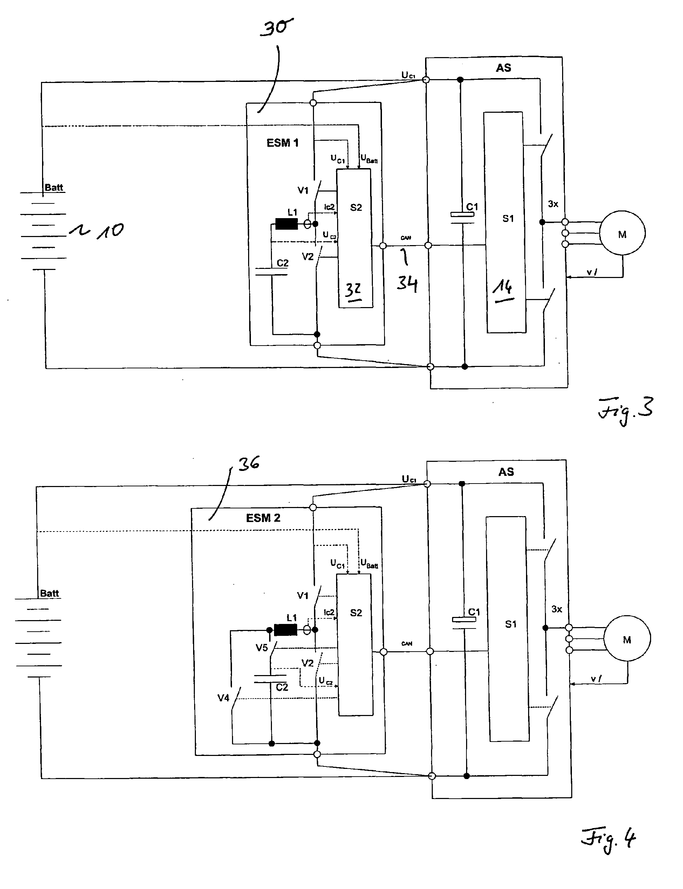

Im generatorischen Betrieb, beispielsweise bei einem Bremsvorgang, wird der Kondensator C2 durch Schließen des Schalters V1 und Öffnen der Schalter V2 und V3 auch auf Spannung größer als U_{Batt} aufgeladen. Im motorischen Betrieb der Steuereinheit 14 kann der Kondensator C2 zunächst allein den Zwischenkreis versorgen bis eine Spannung auf U_{Batt} gesunken ist. Danach wird Schalter V3 geschlossen und die Batterie übernimmt die Versorgung. Der Kondensator C2 kann durch Schalter V3 weiter entladen werden als in den in Fign. 1 oder 3 dargestellten Ausführungsformen. Die Zwischenkreisspannung U_{C1} wird zusätzlich durch den Kondensator C2 gestützt, indem Induktivität L1 und Schalter V1 und V2 als Hochsetzsteller geschaltet werden. Bei einem Bremsvorgang wird der Kondensator C2 über den Generatorbetrieb der Steuerung und Schalter V1 auf ein Spannungsniveau aufgeladen, das höher als U_{Batt} sein kann.

Ferner kann die Steuereinheit 28 vorsehen, dass bei einem Fahrzeugstillstand und einer gegebenenfalls nicht ausreichenden Ladung des Kondensators C2 Leistung aus der Batterie 10 entnommen wird, um den Kondensator C2 für die nächste Fahrt aufzuladen.

Figur 3 zeigt ein Energiesparmodul 30, das in seinem strukturellen Aufbau Energiesparmodul 26 aus Figur 2 entspricht. Erneut ist eine Steuerung 32 vorgesehen, an der als Eingangsgrößen U_{Batt}, U_{C1}, I_{C2} und U_{C2} anliegen. Ferner ist die Steuerung 32 über einen CAN-Feldbus 34 mit der Steuerung 14 verbunden. Im Gegensatz zu der in Figur 2 dargestellten Variante des Energiesparmoduls 26, ist hier bei der Ausführung gemäß Figur 3 nicht vorgesehen, über einen Schalter V3 den Kondensator beim Wiederaufladen von der Batterie zu trennen, so dass die Ladespannung nicht auf einen von der Batteriespannung unabhängigen Wert geregelt werden kann.

Die in Figur 4 dargestellte Variante eines Energiesparmoduls 36 unterscheidet sich von der Variante aus Figur 3 dahingehend, dass ein Schalter V4 vorgesehen ist, der parallel zu dem Kondensator C2 geschaltet ist. In dem Parallelast zu dem Kondensator C2 ist ein weiterer zusätzlicher Schalter V5 vorgesehen. Schalter V4 und V5 werden von dem Energiesparmodul 36 angesteuert, und erlauben es, dass das Auf- bzw. Entladen des Kondensators C2 unabhängig von einer Spannungsänderung an der Batterie erfolgen kann. Auf diese Art und Weise kann der Kondensator C2 zugeschaltet werden, um die Spannung U_{C1} auf einem vorbestimmten Wert konstant zu halten. Hierbei arbeiten V1, V2, V4, V5 und L1 als Hochsetzsteller oder als Tiefsetzsteller..

Figur 5 zeigt eine weitere Ausführungsform der Erfindung, bei der das Energiesparmodul 36 aus Figur 4 mit der Antriebssteuerung 14 zusammengeführt ist. Die so gebildete Gesamtsteuerung 38 übernimmt dabei die Aufgabe der Antriebssteuerung 14 und zusätzlich der Steuerung S2 aus dem Energiesparmodul 36. Eine Verbindung zwischen den beiden Steuerungen über den CAN-Bus kann entfallen. Bei der neugebildeten Steuerung 38 liegen als Eingangsgrößen wieder die Batteriespannung U_{Batt}, die am Motor anliegende Spannung U_{C1} der über den Kondensator C2 fließen Strom I_{C2} und die in dem Kondensator C2 anliegende Spannung U_{C2} an. Über die Steuerung 38 werden die Schalter V1 und V2 sowie V4 und V5 zum Be- und Entladen des Kondensators C2 geschaltet werden. Die Steuerung S2 schaltet weiterhin in bekannter Weise die Schalter 40 und 42 zur Versorgung des Antriebs 12. Der Kondensator C1, der zur Glättung von Spannungsspitzen aufgrund der Schaltvorgänge vorgesehen ist, ist ebenfalls in Figur 5 dargestellt.

Das Verhältnis von Batteriekapazität und Kapazität des eingesetzten Kondensators hängt stark vom Fahrzeugeinsatz ab. Besondere Vorteile entstehen dort, wo das Flurförderzeug besonders häufig Brems- oder Beschleunigungsvorgängen ausgesetzt ist. Für Flurförderzeuge, deren Einsatz ein hohes Maß an Rückgewinnung von Energie erlaubt, lassen sich die Batteriekapazitäten deutlich reduzieren.

Dies sei an dem nachfolgenden Beispiel näher erläutert:
Im Kommissioniereinsatz durchschnittlich einer Tonne Nutzlast werde beispielsweise eine 465 Ah-Batterie eingesetzt. Eine solche Batterie reicht erfahrungsgemäß für eine Achtstundenschicht aus. Üblicherweise durchfährt das Flurförderzeug während dieser Schicht ungefähr 480-Anfahr- und Bremsvorgänge. Dies entspricht einem Vorgang pro Minute. Bei jedem Bremsvorgang können ungefähr 250 As gerettet werden, so dass pro Schicht ungefähr 33,3 Ah gerettet werden können. In dem vorliegenden Beispiel können grob geschätzt also ungefähr 30 Ah der Batterie eingespart werden, so dass ein erfindungsgemäß ausgeführtes Flurförderzeug mit einer 435 Ah-Batterie ausgestattet werden kann.

Ein zentrales Merkmal der Erfindung, die es erlaubt, einen zusätzlichen Kondensator C2 in die Ansteuerung des Flurförderzeugs zu integrieren, besteht darin, dass ein Hoch- oder Tiefsetzsteller im Flurförderzeug zur Stützung der Batteriespannung eingesetzt wird.

## Patentansprüche

1. Flurförderzeug mit einem elektrischen Antrieb (12), der von einer wiederaufladbaren Batterie (10) gespeist werden kann, und mit einer Steuerung für den elektrischen Antrieb, die den Antrieb (12) in einen generatorischen Betrieb umschalten kann, wobei ein zweiter Energiespeicher (22) vorgesehen ist, wobei der zweite Energiespeicher im generatorischen Betrieb des Antriebs (12) aufladbar und im motorischen Betrieb den Antrieb speisen kann, **dadurch gekennzeichnet, dass** ein Neigungssensor vorgesehen ist, wobei der zweite Energiespeicher in weiteren vorbestimmten Fahr- und Betriebszuständen von der Batterie auf eine vorbestimmte Ladespannung geladen wird, wobei abhängig von dem erfassten Wert für die Neigung ein Wiederaufladen erfolgt.

2. Flurförderzeug nach Anspruch 1, **dadurch gekennzeichnet, dass** der zweite Energiespeicher auf eine Ladespannung aufgeladen werden kann, die größer oder gleich der Batteriespannung ist.

3. Flurförderzeug nach Anspruch 1 oder 2, **dadurch gekennzeichnet, dass** in vorbestimmten Fahr- und/oder Betriebszuständen der elektrische Antrieb von dem zweiten Energiespeicher und von der Batterie gespeist ist.

4. Flurförderzeug nach Anspruch 1 oder 2, **dadurch gekennzeichnet, dass** in vorbestimmten Fahr- und/oder Betriebszuständen der elektrische Antrieb ausschließlich von dem zweiten Energiespeicher gespeist ist.

5. Flurförderzeug nach Anspruch 3, **dadurch gekennzeichnet, dass** bei einer Beschleunigung des Fahrzeugs der zweite Energiespeicher zur Spannungsversorgung des elektrischen Fahrantriebs zugeschaltet ist.

6. Flurförderzeug nach Anspruch 3, **dadurch gekennzeichnet, dass** bei Überschreiten einer vorbestimmten Geschwindigkeit für das Flurförderzeug der zweite Energiespeicher zur Versorgung des Fahrantriebs zugeschaltet ist.

7. Flurförderzeug nach einem der Ansprüche 1 bis 6, **dadurch gekennzeichnet, dass** im Stillstand des Fahrzeugs der zweite Energiespeicher abhängig von dem Wert der sensierten Neigung aufgeladen wird.

8. Flurförderzeug nach einem der Ansprüche 1 bis 7, **dadurch gekennzeichnet, dass** wenn der sensierte Wert für die Neigung eine minimale Neigung überschreitet, der zweite Energiespeicher auf einen vorbestimmten Wert wieder aufgeladen wird, der kleiner als die Batteriespannung ist.

9. Flurförderzeug nach einem der vorangehenden Ansprüche, **dadurch gekennzeichnet, dass** der zweite Energiespeicher in eine Steuereinheit des Antriebs integriert ist.

10. Flurförderzeug nach einem der vorangehenden Ansprüche, **dadurch gekennzeichnet, dass** der zweite Energiespeicher in ein Energiesparmodul (26) integriert ist, das mit einer Steuerung (28) des Flurförderzeugs Daten über einen Feldbus (30) austauschen kann.

## Claims

1. An industrial truck with an electric drive (12) which can be fed by a rechargeable battery (10), and with a control system for the electric drive which can switch over the drive (12) into a generator operation, wherein
a second energy storage device (22) is provided, wherein
the second energy storage device can be charged in the generator operation of the drive (12), and feed the drive in the motor operation,
**characterised in that**
an inclination sensor is provided, wherein the second energy storage device is charged to a predetermined charging voltage by the battery in further predetermined travel- and operation conditions, recharging taking place depending on the detected value for the inclination.

2. The industrial truck according to claim 1, **characterised in that** the second energy storage device can be charged to a charging voltage which is greater than or equal to the battery voltage.

3. An industrial truck according to claim 1 or 2, **characterised in that** in predetermined travel- and/or operation conditions, the electric drive is fed by the second energy storage device and by the battery.

4. An industrial truck according to claim 1 or 2, **characterised in that** in predetermined travel- and/or operation conditions, the electric drive is fed by the second energy storage device only.

5. The industrial truck according to claim 3, **characterised in that** upon an acceleration of the vehicle, the second energy storage device is added to the power supply of the electric travel drive.

6. The industrial truck according to claim 3, **characterised in that** the second energy storage device is added to the power supply of the travel drive when a predetermined velocity for the industrial truck is exceeded.

7. An industrial truck according to any one of claims 1 to 6, **characterised in that** in the standstill of the vehicle, the second energy storage device is charged depending on the value of the detected inclination.

8. An industrial truck according to any one of claims 1 to 7, **characterised in that** when the detected value of the inclination exceeds a minimal inclination, the second energy storage device is recharged up to a predetermined value which is smaller than the battery voltage.

9. An industrial truck according to any one of the preceding claims, **characterised in that** the second energy storage device is integrated into a control unit of the drive.

10. An industrial truck according to any one of the preceding claims, **characterised in that** the second energy storage device is integrated into an energy saving module (26), which can exchange data with a control system (28) of the industrial truck via a field bus (30).

## Revendications

1. Chariot de manutention avec un entraînement électrique (12) qui peut être alimenté par une batterie rechargeable (10), et avec un système de commande pour l'entraînement électrique qui peut commuter l'entraînement (12) vers un fonctionnement comme générateur, dans lequel
un deuxième accumulateur d'énergie (22) est pourvu, dans lequel
le deuxième accumulateur d'énergie peut être chargé dans le fonctionnement de l'entraînement (12) comme générateur, et peut alimenter l'entraînement dans le fonctionnement comme moteur,
**caractérisé en ce que**
un capteur d'inclinaison est pourvu, le deuxième accumulateur d'énergie étant chargé jusqu'à une tension de charge prédéterminée par la batterie dans des autres conditions de marche et de fonctionnement prédéterminées, le rechargement ayant lieu dépendant de la valeur détectée pour l'inclinaison.

2. Chariot de manutention selon la revendication 1, **caractérisé en ce que** le deuxième accumulateur d'énergie peut être chargé à une tension de charge qui est plus grande ou égale à la tension de la batterie.

3. Chariot de manutention selon la revendication 1 or 2, **caractérisé en ce que** dans des conditions de marche et de fonctionnement prédéterminées, l'entraînement électrique est alimenté par le deuxième accumulateur d'énergie et par la batterie.

4. Chariot de manutention selon la revendication 1 or 2, **caractérisé en ce que** dans des conditions de marche et/ou de fonctionnement prédéterminées, l'entraînement électrique est alimenté seulement par le deuxième accumulateur d'énergie.

5. Chariot de manutention selon la revendication 3, **caractérisé en ce que** chez une accélération du véhicule, le deuxième accumulateur d'énergie est activé pour l'alimentation en tension de l'entraînement de marche électrique.

6. Chariot de manutention selon la revendication 3, **caractérisé en ce que** le deuxième accumulateur d'énergie est activé pour l'alimentation en tension de l'entraînement de marche quand une vitesse prédéterminée pour le chariot de manutention est dépassée.

7. Chariot de manutention selon l'une quelconque des revendications 1 à 6, **caractérisé en ce que** dans l'arrêt du véhicule, le deuxième accumulateur d'énergie est chargé en fonction de la valeur d'inclinaison détectée.

8. Chariot de manutention selon l'une quelconque des revendications 1 à 7, **caractérisé en ce que** quand la valeur détectée pour l'inclinaison dépasse une inclinaison minimale, le deuxième accumulateur d'énergie est rechargé jusqu'à une valeur prédéterminée qui est plus petite que la tension de la batterie.

9. Chariot de manutention selon l'une quelconque des revendications précédentes, **caractérisé en ce que** le deuxième accumulateur d'énergie est intégré dans une unité de commande de l'entraînement.

10. Chariot de manutention selon l'une quelconque des revendications précédentes, **caractérisé en ce que** le deuxième accumulateur d'énergie est intégré dans un module d'économie d'énergie (26, qui peut échanger des données avec un système de commande (28) du chariot de manutention via un bus de terrain (30).
